# EUROPEAN PATENT SPECIFICATION

(11) **EP 1 788 165 B1**
(45) Date of publication and mention of the grant of the patent: **01.02.2012**
(21) Application number: 06124344.0
(22) Date of filing: 17.11.2006
(51) Int. Cl.: E04D 13/17, A01K 31/14

(54) **Roof construction for nesting birds**
Dachstruktur zur Haltung von Vögeln
Structure de toiture pour la nidification des oiseaux

(30) Priority: 18.11.2005 NL 1030467
(43) Date of publication of application: 23.05.2007
(73) Proprietor: Comfortdak B.V., 3707 TB Zeist (NL)
(72) Inventor: Borra, Hans Antonius, 3707 TB, Zeist (NL); Berlee, Mr Anthonie Bernardus, De Bilt 3731GC (NL)
(74) Representative: van Westenbrugge, Andries

(56) References cited:
- EP-A2- 0 340 856
- DE-A1- 10 318 119
- GB-A- 2 197 776
- NL-A- 9 300 164
- US-A1- 2004 020 444

## Description

The invention relates to a roof construction for keeping birds.

Birds nest in roofs. This causes problems as the ventilation of the roofs is blocked by nests and remnants which remain behind, having an adverse effect on the life of the roof. Furthermore, the nests and remnants which remain behind result in a lot of vermin, which is detrimental to public health. Many countries have therefore made it obligatory to make arrangements so that access to the roofs is blocked for birds. However, the result of this is that various bird species, such as sparrows, have trouble finding spaces in which to nest. Partly as a result thereof, these bird species are at risk of becoming extinct. In the prior art, various proposals for bird-inhibiting arrangements can be found, these being fitted to the lowermost tiling batten and the roof covering extending some distance underneath the latter. This results in a gap which extends over the entire length of the roof and is available for both desirable and undesirable birds. In addition, the freely extending part puts the roof covering under a considerable load. An example thereof can be found in AU-B1-39 621/78 (520380), NL 9300164 A, DE 34 40 061, DE 197 08 128.

NL 9300164 A discloses a roof construction according to the preamble of claim 1.

It is an aim of the invention to provide in a roof construction in which predetermined birds, such as sparrows can be kept in such a roof, with the ventilation of the roof being maintained and the roof covering being supported in an optimum manner.

This aim is realised with a roof construction according to the invention having the features of Claim 1.

The present invention provides a dwelling space for birds located between the lowermost support and a higher spot on the roof where the bird-inhibiting arrangement is provided. According to the present invention, the lowermost support is provided, for this purpose with openings and the bird-inhibiting arrangement above is, of course, bird- and mouseproof. A construction of this type can be achieved with any conceivable roof. In particular, this can be used in structures having tiling battens and laths. In this case, the laths extend from the top to the bottom and the tiling battens substantially horizontally. In such a case, the sealing is provided at the tiling batten. The roof framework can be both a rafter roof and a purlin roof or variants thereof, to which any kind of roof panel or sealing may be fitted.

The wording: an edge which rests on a tiling batten in a substantially sealing manner, is understood to mean that the edge is shaped such that it rests on the tiling batten in such a manner that dirt, possibly with the exception of very fine dirt, cannot get through the openings between the tiling batten and the edge.

With the roof construction according to the invention a space is created, namely between the roof tiles and the base surface, in which the birds can nest. Further access to the space underneath the roof tiles of the roof is blocked by the bird-inhibiting means. As the base surface is at a distance from the roof panel, space is provided in order to maintain ventilation.

The bird-inhibiting arrangement may be integrated with an additional spacer on which the roof covering is further supported.

According to a preferred embodiment of the invention, the distance between the bird-inhibiting means and the first-mentioned spacer is at least 10 cm. In this manner, a comfortable nesting space is provided for the birds.

In an embodiment according to the invention, the roof construction comprises a device, which comprises a base surface, an edge, bird-inhibiting means and supporting means. The supporting means comprise at least two supporting zones which are on the lower side of the base surface and, during use, support the device on roof laths and/or tiling battens. This embodiment is advantageous due to its simple construction.

In an embodiment according to the invention, the edge comprises a supporting element extending from the main surface in order, during use, to support a roof tile. This offers the advantage that the supporting element takes over the function of the tiling batten on which the edge of the main surface rests and thus renders this tiling batten superfluous. By forming the base surface, the edge and the supporting element in one piece, it is possible to seal the edge of the main surface completely against dirt.

In one embodiment according to the invention, the device comprises a flange extending from the bird-inhibiting means, which flange, in use, is positioned against a tiling batten. By means of the flange, the device according to the invention can be attached to a tiling batten in a simple manner with fastening means.

According to the invention, the supporting surface comprises recessed zones having a diameter of approximately 35 mm, with the longitudinal axis of this opening extending substantially at right angles to the edge. With roofs having flat roof tiles, the opening of a recessed zone gives birds access to the nesting space provided by the device between these roof tiles and the main surface. The opening is preferably oval or circular, has a diameter of 35 mm. The supporting element has a plurality of recessed zones creating said openings. This is advantageous as many bird species, such as sparrows, live in colonies. The openings are a regular distance apart. This distance may be between 10 and 15 cm and is preferably 13 cm.

In an embodiment according to the invention the bird-inhibiting means comprise projections spaced. The projections are arranged at such a distance from one another that they do not block a flow of air, but do prevent birds, such as sparrows, from passing through. This results in the nesting space provided by the device, that is the space between the roof tiles and the base surface, contributing to the ventilation of the roof. The projections are preferably plastically or elastically deformable.

In an embodiment according to the invention, the main surface is formed by parts which are displaceable relative to one another. Thus, the dimensions of the main surface can be adjusted to the different distances on roofs between both the tiling battens and the roof laths. Preferably, the main surface is formed by two panels adjoining one another and displaceable relative to one another.

The base surface may have a rough surface. The rough surface provides more grip for birds in the nesting space provided by the device when the birds move over the main surface. The base surface may comprise ventilation openings. In particular during the summer, the temperature in the nesting space provided by the device can become high. The ventilation openings provide some cooling in the nesting space. Preferably, the ventilation openings are formed by a microprofile in the base surface.

The base surface may comprise reinforcing ribs. These reinforcing ribs can extend substantially parallel to the edge. In this manner, ridges may be formed on the top surface of the base surface. These ridges may provide some hold for the birds or for the nests made by the birds in the nesting space.

In an embodiment according to the invention, the device comprises an eave profile extending from the edge. The eave profile protects the eave of the roof against, inter alia, weather conditions and splashing water from the gutter. The eave profile can be removably attached to the device.

The device used in a roof construction according to the invention preferably has such a shape and is made from such a material that it is able to support the weight of a person. The device may comprise plastic, preferably polyethylene, and be produced by an injection-moulding process.

In an embodiment, the device may comprise at least two spaced sealing elements, which, in use, extend from the main surface to the roof tiles above and from the edge to the bird-inhibiting means. The sealing elements can be used in order to seal both sides of the device for keeping birds. In addition, the sealing elements can be used for dividing the nesting space provided by the device for keeping birds into different parts. This is advantageous in order to provide nesting space for a plurality of bird colonies.

The invention furthermore relates to a pitched roof comprising roof tiles and all features defined in claim 1. The pitched roof may comprise roof laths attached to the roof panel, tiling battens attached at right angles to the roof laths and roof tiles arranged on the tiling battens. The term pitched roof is understood to refer to rafter roofs, purlin roofs, mansard roofs, sheet roofing, roof elements and any other pitched roofs known in the prior art which are used in combination with roof tiles.

The pitched roof may comprise at least two sealing elements arranged at a distance from one another, which extend from the base surface to roof tiles above and from the edge to the bird-inhibiting means.

The pitched roof may comprise a plurality of devices. These devices may be arranged at a distance from one another. This means that, viewed from the ground, the devices can be positioned at a lateral distance from one another and/or that the devices can be positioned at a distance one below the other.

The invention will be explained in more detail with reference to a detailed description of the attached figures, in which:
Fig. 1a shows a perspective view of a first part of a device for use in a roof construction according to the invention,
Fig. 1b shows a bottom view of the first part of the device from Fig. 1a,
Fig. 2 shows an enlarged part II of the first part of the device from Fig. 1a,
Fig. 3 shows a perspective view of the device for use in a roof construction according to the invention which is arranged on a pitched roof,
Fig. 4 shows a cross-sectional view of a roof construction according to the invention with the device from Fig. 3, including an eave profile, along line IV-IV.

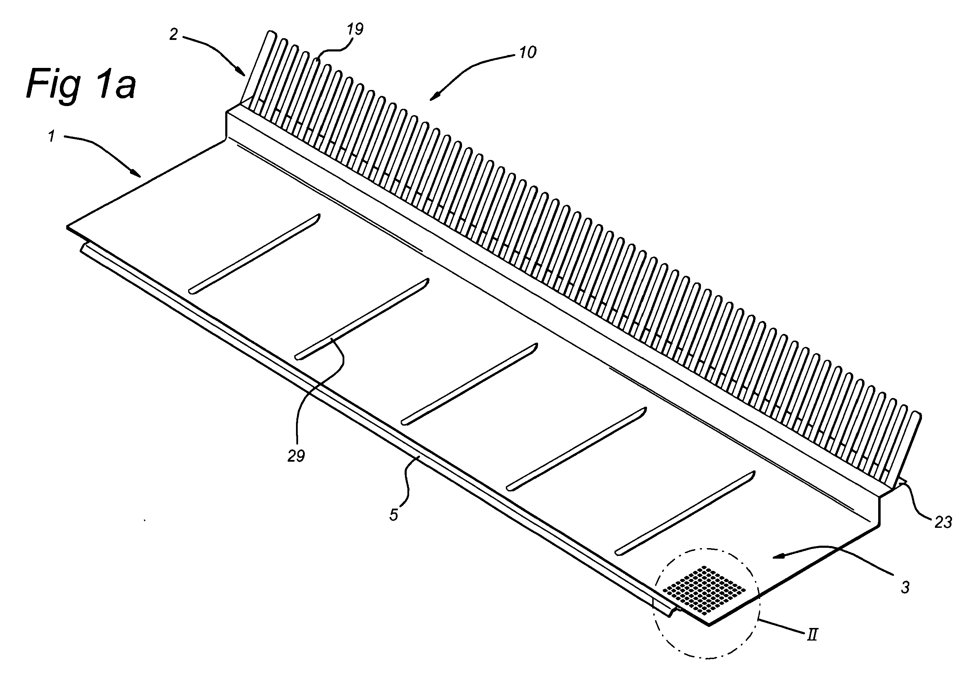

Fig. 1a shows a first part of the device for use in a roof construction according to the invention, which first part comprises a base surface 1, an edge 5 and bird-inhibiting means 2 extending at an angle from the main surface 1. The dimension of the base surface 1 between the edge 5 and the bird-inhibiting means 2, in the direction perpendicular to the edge 5, is approximately 15 cm. This dimension can be much larger, but should not be much smaller. In the direction perpendicular to the main surface 1, the bird-inhibiting means 2 should extend up to at least 2 cm above the main surface 1. This distance can be much greater, but should not be much smaller. On the upper side 3, the main surface 1 contains reinforcing ribs 29. The bird-inhibiting means 2 contain projections 19 arranged at a distance from one another. Viewed from the perspective of this figure, the device has a flange 23 on the rear side of the bird-inhibiting means 2. The flange 23 extends from the bird-inhibiting means 2, substantially in the same direction as the main surface 1.

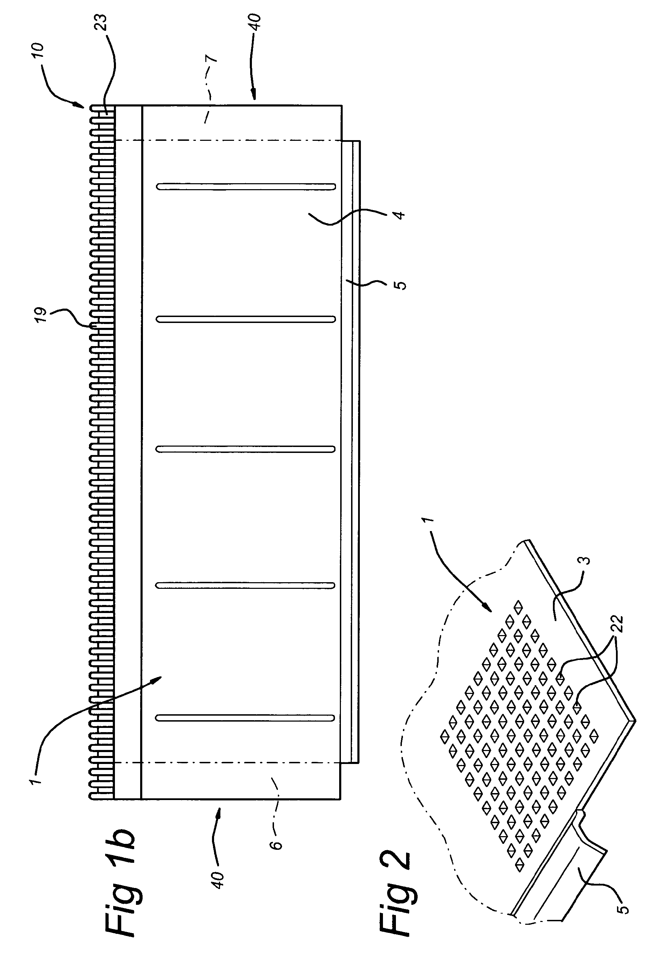

Fig. 1b shows a bottom view of the first part of the device from Fig. 1a. The supporting means 40 are formed by two supporting zones 6 and 7 on the bottom side 4 of the main surface 1. In use, each of these supporting zones 6 and 7 is disposed on a separate tiling lath in order to support the device.

Fig. 2 shows an enlarged part I of the first part of the device from Fig. 1a, where it can be seen that the main surface 1 contains ventilation openings 22, which ventilation openings 22 result in the upper side 3 of the main surface 1 being a rough surface.

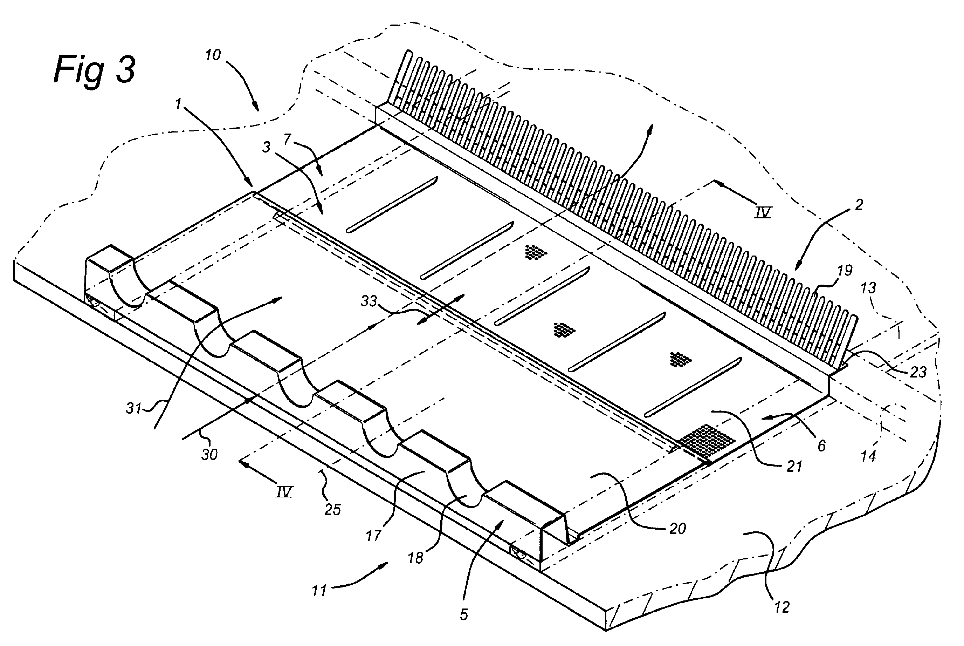

Fig. 3 shows the device for use in a roof construction according to the invention which is arranged on a pitched roof. Identical components of the device are denoted by the same reference numbers as those used in Figs. 1 and 2. The pitched roof 11, of which only part is illustrated, has a roof panel 12, roof laths 13 and tiling battens 14 arranged at right angles to the latter. For the sake of clarity, the roof tiles have not been illustrated in the drawing. The device 10 is attached to the tiling battens 14 and the roof laths 13 by means of nails (not shown). The main surface 1 is formed by two panel-shaped parts 20 and 21 which can be displaced relative to one another in the direction of arrow 33. The edge 5 has a supporting element 17 with a plurality of recessed zones 18. The longitudinal axis 25 of the recessed zones 18 extends substantially at right angles to the edge 5. In use, birds can gain access to the space above the upper side 3 of the main surface 1 via the recessed zones 18, as indicated by arrow 31. Because the main surface 1 is at a distance from the roof panel 12, air can flow through the space between the roof panel 12 and the main surface 1, as illustrated by arrow 30.

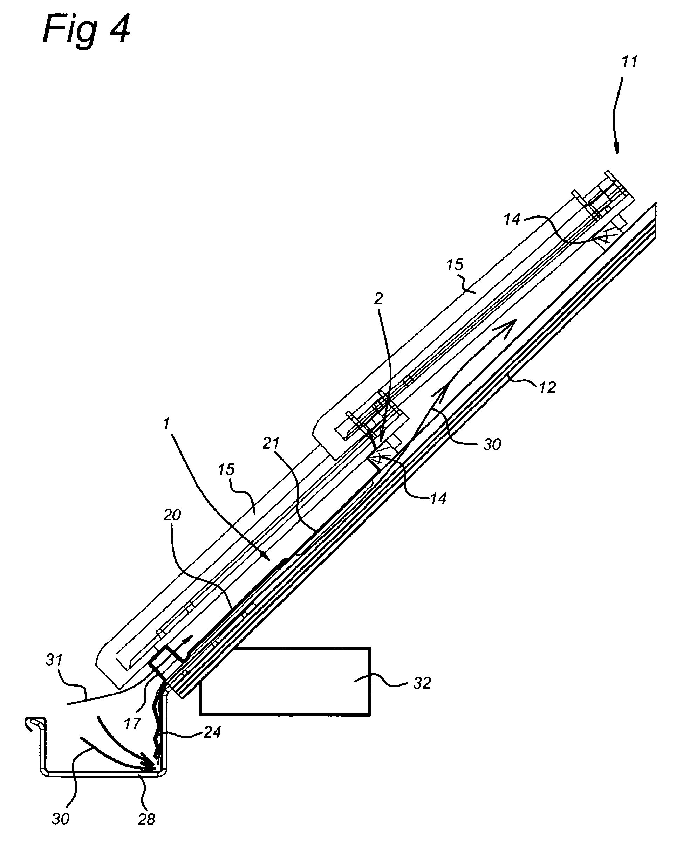

Fig. 4 shows a cross-sectional view of a roof construction according to the invention with the device from Fig. 3 along line IV-IV. In order to illustrate the operation of the device, the roof tiles 15 of the pitched roof 11 are shown in this drawing. Furthermore, the supporting beam 32, which supports the pitched roof 11, and a gutter 28 are shown. The device 10 comprises an eave profile 24 integrally formed with the edge 5 and extending from the latter. Arrow 30 indicates the necessary flow of air between the main surface 1 and the roof panel 12. Arrow 31 indicates the route which the birds have to follow in order to reach the nesting space between the roof tiles 15 and the main surface 1.

It will be clear to the person skilled in the art that many variants of the device according to the invention are conceivable without departing from the scope of protection of the invention defined in the claims.

## Claims

1. Roof construction for a sloping roof comprising a roof panel (12), a roof covering (15), a bird-inhibiting arrangement (2) between said roof panel (12) and said roof covering (15), said bird-inhibiting arrangement (2) extending at substantial right angles to the slope of the roof construction and blocking access to the space between the roof panel (12) and the roof covering (15) situated behind said bird-inhibiting arrangement (2),
**characterised in that**,
a spacer (5) is arranged on this roof panel (12) and a roof covering (15) rests on said spacer (5), said spacer (5) comprising an elongate part with a supporting surface on which the roof covering (15) rests and lateral surfaces which adjoin the former on both sides, said supporting surface comprising recessed zones arranged at regular intervals, said spacer extending substantially at right angles to the slope of said roof, said recessed zones of the spacer in combination with the roof covering (15) form openings (18) for birds having an effective diameter of approximately 35 mm and said bird-inhibiting arrangement (2) is arranged at a distance from said spacer (5) there above,
such that a space is created in the roof construction in which birds can nest, said space being located between the roof covering (15), the roof panel (12), the spacer (5) and the bird-inhibiting arrangement (2).

2. Roof construction according to claim 1, wherein said bird-inhibiting means comprises a further spacer (14).

3. Roof construction according to Claim 2, wherein said further spacer (14) is provided with an eaves board (19).

4. Roof construction according to one of the preceding claims, wherein the distance between said spacer (5) and the bird-inhibiting arrangement (2) is at least 10 cm.

5. Roof construction according to one of the preceding claims, wherein said bird-inhibiting arrangement (2) comprises a flange (23) extending from the latter, said flange (23), in use, being positioned against a further spacer (14).

6. Roof construction according to one of the preceding claims, wherein a separation plate (20, 21) extending parallel to the roof panel (12) is connected to the (further) spacer (5, 14).

7. Roof construction according to Claim 6, wherein said separation plate comprises ventilation openings (22).

## Patentansprüche

1. Dachkonstruktion für ein Schrägdach, die eine Dachhaut (12), eine Dachabdeckung (15), sowie eine Vogelabweisungsanordnung (2) zwischen der Dachhaut (12) und der Dachabdeckung (15) umfasst, wobei sich die Vogelabweisungsanordnung (2) im Wesentlichen im rechten Winkel zu der Schräge der Dachkonstruktion erstreckt und Zugang zu dem Raum zwischen der Dachhaut (12) und der Dachabdeckung (15) verhindert, der sich hinter der Vogelabweisungsanordnung (2) befindet, **dadurch gekennzeichnet, dass**
ein Abstandshalter (5) an dieser Dachhaut (12) angeordnet ist und eine Dachabdeckung (15) auf dem Abstandshalter (5) aufliegt, der Abstandshalter (5) einen länglichen Teil mit einer Tragefläche, auf der die Dachabdeckung (15) aufliegt, und seitliche Flächen umfasst, die an diese an beiden Seiten angrenzen, die Tragefläche ausgesparte Zonen umfasst, die in gleichmäßigen Abständen angeordnet sind, sich der Abstandshalter im Wesentlichen im rechten Winkel zu der Schräge des Dachs erstreckt, die ausgesparten Zonen des Abstandshalters zusammen mit der Dachabdeckung (15), Öffnungen (18) für Vögel bilden, die einen effektiven Durchmesser von ungefähr 35 mm haben, und die Vogelabweisungsanordnung (2) in einem Abstand zu dem Abstandshalter (5) darüber angeordnet ist,
so dass ein Raum in der Dachkonstruktion geschaffen wird, in dem Vögel nisten können, und sich der Raum zwischen der Dachabdeckung (15), der Dachhaut (12), dem Abstandshalter (5) und der Vogelabweisungsanordnung (2) befindet.

2. Dachkonstruktion nach Anspruch 1, wobei die Vogelabweisungsanordnung einen weiteren Abstandshalter (14) umfasst.

3. Dachkonstruktion nach Anspruch 2, wobei der weitere Abstandshalter (14) mit einem Traufbrett (19) versehen ist.

4. Dachkonstruktion nach einem der vorangehenden Ansprüche, wobei der Abstand zwischen dem Abstandshalter (5) und der Vogelabweisungsanordnung (2) mindestens 10 cm beträgt.

5. Dachkonstruktion nach einem der vorangehenden Ansprüche, wobei die Vogelabweisungsanordnung (2) einen Flansch (23) umfasst, der sich von letzterer aus erstreckt, und der Flansch (23) in Funktion an einem weiteren Abstandshalter (14) positioniert ist.

6. Dachkonstruktion nach einem der vorangehenden Ansprüche, wobei eine Trennplatte (20, 21), die sich parallel zu der Dachhaut (12) erstreckt, mit dem (weiteren) Abstandshalter (5,14) verbunden ist.

7. Dachkonstruktion nach Anspruch 6, wobei die Trennplatte Belüftungsöffnungen (22) umfasst.

## Revendications

1. Construction de toiture pour une toiture en pente comprenant un panneau de toiture (12), une couverture de toiture (15), un agencement anti-oiseau (2) entre ledit panneau de toiture (12) et ladite couverture de toiture (15), ledit agencement anti-oiseau (2) s'étendant à un angle sensiblement droit par rapport à la pente de la construction de toiture et bloquant l'accès à l'espace entre le panneau de toiture (12) et la couverture de toiture (15) située derrière ledit agencement anti-oiseau (2),
**caractérisée en ce**
**qu'**une entretoise (5) est agencée sur ce panneau de toiture (12) et une couverture de toiture (15) repose sur ladite entretoise (5), ladite entretoise (5) comprenant une partie oblongue avec une surface de support, sur laquelle la couverture de toiture (15) repose, et des surfaces latérales qui sont contiguës à ladite surface de support sur les deux côtés, ladite surface de support comprenant des zones évidées agencées à des intervalles réguliers, ladite entretoise s'étendant à un angle sensiblement droit par rapport à la pente de ladite toiture, lesdites zones évidées de l'entretoise, en association avec la couverture de toiture (15), forment des ouvertures (18) pour des oiseaux possédant un diamètre utile d'approximativement 35 mm et ledit agencement anti-oiseau (2) est agencé à une distance de ladite entretoise (5) au-dessus de celle-ci, de sorte qu'un espace soit créé dans la construction de toiture dans lequel des oiseaux peuvent nidifier, ledit espace étant situé entre la couverture de toiture (15), le panneau de toiture (12), l'entretoise (5) et l'agencement anti-oiseau (2).

2. Construction de toiture selon la revendication 1, dans laquelle ledit moyen anti-oiseau comprend une entretoise supplémentaire (14).

3. Construction de toiture selon la revendication 2, dans laquelle ladite entretoise supplémentaire (14) est pourvue d'une bordure de toiture (19).

4. Construction de toiture selon une des revendications précédentes, dans laquelle la distance entre ladite entretoise (5) et l'agencement anti-oiseau (2) est au moins 10 cm.

5. Construction de toiture selon une des revendications précédentes, dans laquelle ledit agencement anti-oiseau (2) comprend une bride (23) s'étendant à partir de celui- ci, ladite bride (23), durant l'utilisation, étant positionnée contre une entretoise supplémentaire (14).

6. Construction de toiture selon une des revendications précédentes, dans laquelle une plaque de séparation (20, 21) s'étendant parallèlement au panneau de toiture (12) est reliée à l'entretoise (supplémentaire) (5, 14).

7. Construction de toiture selon la revendication 6, dans laquelle ladite plaque de séparation comprend des ouvertures de ventilation (22).
